Europäisches Patentamt

European Patent Office

Office européen des brevets

(11) Publication number: **0 212 899 B1**

## EUROPEAN PATENT SPECIFICATION

(45) Date of publication of patent specification: **08.07.92**

(51) Int. Cl.5: **G01N 29/00**

(21) Application number: **86305969.7**

(22) Date of filing: **01.08.86**

(54) **Ultrasonic testing of materials.**

(30) Priority: **12.08.85 US 764912**

(43) Date of publication of application:
**04.03.87 Bulletin 87/10**

(45) Publication of the grant of the patent:
**08.07.92 Bulletin 92/28**

(84) Designated Contracting States:
**DE FR GB**

(56) References cited:
**EP-A- 0 150 997**
**GB-A- 1 332 898**
**US-A- 3 898 840**
**US-A- 4 279 019**

(73) Proprietor: **THE BABCOCK & WILCOX COMPANY**
**1010 Common Street, P.O. Box 60035**
**New Orleans, Louisiana 70160(US)**

(72) Inventor: **Lawrie, William E.**
**2432 Indian Hill Road**
**Lynchburg, VA 24503(US)**
Inventor: **Brophy, Joseph Wayne**
**5021 190th Pl. N.E.**
**Redmond, WA 98502(US)**
Inventor: **Powers, Thomas, Jr.**
**211 Burr Oak**
**Lynchburg, VA 24502(US)**

(74) Representative: **Cotter, Ivan John et al**
**D. YOUNG & CO. 10 Staple Inn**
**London WC1V 7RD(GB)**

## Description

This invention relates to the ultrasonic testing of materials.

Conventional ultrasonic testing provides time, amplitude and spatial information that is combined through mechanical and electrical apparatus to form so-called A, B and C scans for flaw detection and sizing. The most commonly used technique is time-amplitude or A scan ultrasonic testing. All of these techniques make use of either a continuous wave or a pulse excitation and time reference signal. A primary limitation of these techniques is that they only allow discrimination via signal amplitudes, time separation or spatial separation. These parameters are insufficient to define independently the size, depth, orientation and location of a flaw.

In coarse-grained materials, ultrasonic energy which is backscattered at grain boundaries provides a signal which is continuous during the time that pulse echoes are being received. These backscattered signals may totally obscure the echoes. Evidence shows that if a defect is present to reflect the ultrasonic energy, the phase of the composite echo may be used to indicate the presence of the defect even though a distinctive pulse may not appear above the noise. The noise is commonly referred to as "grass". Unfortunately, as the transducer used to generate and receive the ultrasound is scanned over the surface, the amplitude will reach a single or at most several peaks before decaying. In contrast, phase would continuously change in one direction with transducer motion, stop when the transducer is at the point of closest approach, and reverse. A single phase measurement is not sufficient. What is needed is a device to sense the change in phase with transducer position. Also, it must indicate the difference between random phase variations obtained with only grain boundary reflections, and a distinctive pattern obtained with a reflector such as a flaw.

US Patent No. US-A-4 253 337 (Vasile) discloses an ultrasonic testing method which utilises phase measurements and/or phase shifting of ultrasonic materials. It also discloses a method of evaluating a defect or discontinuity in an object. As such, US-A-4 253 337 utilises the transmission of an ultrasonic wave into the object and the detection of the wave after it has propagated through the discontinuity. The depth of the discontinuity is also considered with respect to the change in phase and amplitude of the detected wave, which are compared to values of a wave propagating in the absence of a discontinuity.

US Patent No. US-A-4 003 244 (O'Brien et al) discloses an ultrasonic pulse echo thickness apparatus wherein a search signal and an echo signal are amplified so as to be equal in magnitude and also are phase shifted so as to be in phase with each other. In this manner, overall system accuracy is increased. Thus, US-A-4 003 244 deals with the phase of the signal.

European Patent Application No. EP-A-0 150 997 discloses apparatus for determining the attenuation slope coefficient of an ultrasonic wave medium from an ultrasonic wave reflected from the medium using a centre frequency shift method. The centre frequency shift is determined from the time derivative of the phase difference between the incident and reflected waves. A quadrature detector circuit may be used in determining the phase difference.

UK Patent No. GB-A-1 332 898 discloses apparatus for determining the nature of a defect (i.e. whether the defect consists of a single inclusion or a cluster of inclusions) in a medium by varying the frequency of an incident ultrasonic wave and monitoring the change with frequency of the amplitude or phase of the reflected wave.

According to the present invention there is provided ultrasonic apparatus for testing a material for the presence of a discontinuity therein, the apparatus comprising:

an oscillator for generating an oscillator signal at a selected frequency in the ultrasonic range;

a gated amplifier connected to the oscillator for receiving and amplifying the oscillator signal;

transducer means connected to the oscillator for transmitting an ultrasonic signal at the selected frequency into the material and for receiving an echo signal back from the material;

a transmit-receive switch connected to the gated amplifier and to the transducer for alternately supplying oscillator signals to the transducer and receiving echo signals back from the transducer;

a receiver amplifier connected to the transmit-receive switch for receiving and amplifying the echo signals;

phase detector means comprising a phase splitter connected to the oscillator for producing an in-phase oscillator signal and a quadrature oscillator signal, a first phase detector connected to the phase splitter for receiving the in-phase signal and generating a first display signal, and a second phase detector connected to the phase splitter for receiving the quadrature signal and generating a second display signal, the first and second phase detectors being connected to the receiver amplifier for receiving amplified echo signals therefrom; and

display means comprising a cathode ray tube connected to the first and second phase detectors in such a manner that the first and second display signals are input as orthogonal signals to the cathode ray tube, the cathode ray tube generating an image which, when a discontinuity is present, is a rotating spiral vector image the rotation of which about the centre of the display represents phase variations, the distance of the spiral from the centre of the display indicating the amplitude of the echo signal.

The pattern of phase change can be monitored to detect a discontinuity and to determine the depth and location of the discontinuity in the material. Discontinuities may be either discrete defects or intended material variations which influence elastic wave velocities.

The preferred embodiment is a specific application of a more general concept.

The phase of an echo relative to the phase of the original pulse is given by the relationship:

$$\emptyset = 2kR - \sigma$$

wherein:

$\emptyset$ = detected phase magnitude;
$k$ = ($2\pi$/wavelength of pulse);
$R$ = distance from a tranducer to a reflector (flaw); and
$\sigma$ = phase shift during reflection ($\pi$ at a reflection from a lower impedance).

The phase is thus a monotonic function of R.

The preferred embodiment utilises a combination of a distinctive phase shift pattern, obtained on a vectorscope, through the use of two phase detectors, using in-phase and quadrature (90° out of phase) reference signals. The use of two phase detectors generates a rotating vector display on a cathode ray tube of the vectorscope. A pattern of phase change rather than a random phase change is used to indicate the presence of a defect.

Alternative techniques which determine the relationship between the phase detected signal, excitation frequency and reflector position are possible. Unique relationships between the detected phase, excitation frequency and reflector position can be established by suitable calibration from standard test blocks.

The relationship between frequency, phase and distance can be written as:

$$\left.\frac{d\emptyset}{df}\right|R \cdot \left.\frac{df}{dR}\right|\emptyset \cdot \left.\frac{dR}{d\emptyset}\right|f = -1$$

This relationship is referred to as the cycle chain rule and is a consequence of the detected phase being a function of frequency and distance between the transducer and reflector: Thus,

$$\emptyset = F(f,R)$$

where f is the frequency and R is the distance.

The factor

$$\left.\frac{d\emptyset}{df}\right|R$$

can be determined by varying the excitation frequency f while the transducer is at a fixed position. As the frequency f is varied, the phase of the echo will change as indicated by the output of the phase detector which oscillates between maxima and minima. The phase goes through one cycle when the frequency changes by $\Delta f$, where:

$$\Delta F = \frac{C}{2R}$$

where C is the velocity of sound in the test material.

This provides a depth measurement, equivalent to measuring time t, given by:

$$R = C/2. \Delta f$$

The orientation of planar reflectors relative to the axis of the transducer beam can be determined. As the transducer continuously scans over the surface in one direction, the phase of the reflected signal will change first in one direction, stop and then change in the opposite direction. The transducer position at which the rate of phase change is zero is the point of closest approach. This point of closest approach of the transducer to the defect may not be the point at which maximum amplitude is obtained. The difference in positions of zero rate of change of phase and maximum amplitude is dependent upon the direction of the ultrasonic beam axis and upon the orientation of the reflecting surface. This is also true for edge diffracted or mode converted waves.

The preferred embodiment of the invention described hereinbelow provides an apparatus for and a method of detecting the size, depth, orientation and location of flaws in materials by sensing the change in phase of an ultrasonic echo pulse and can be utilised even with coarse-grained materials which suffer from backscattered noise. As indicated above, a change in phase of an echoed pulse with transducer position is sensed, and two phase detectors are used, one using an in-phase reference signal and the other using a quadrature reference signal. The preferred embodiment provides an ultrasonic apparatus which is simple in design, rugged in construction and economical to manufacture.

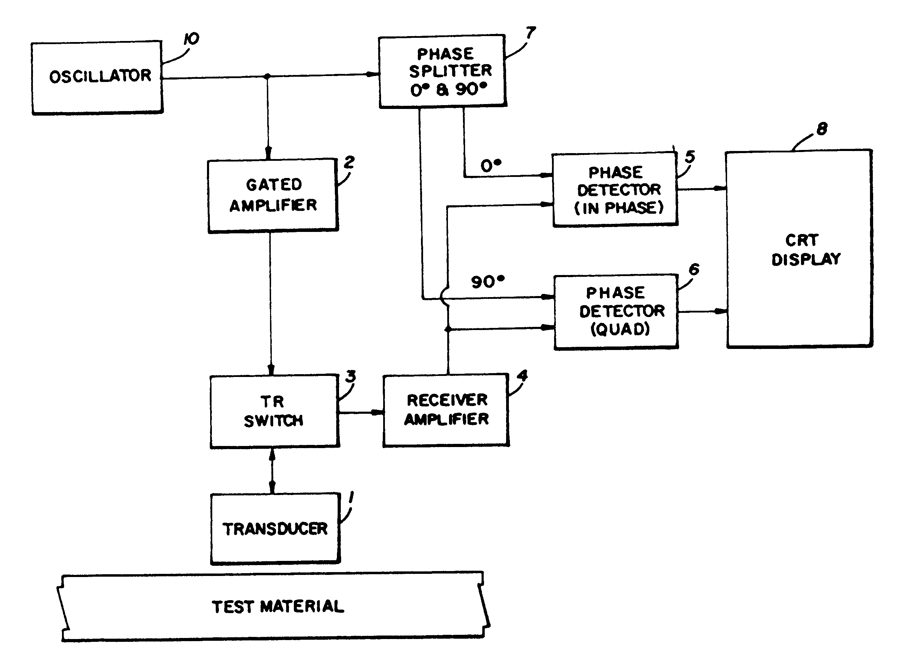

The invention will now be further described, by way of illustrative example, with reference to the accompanying figure which is a block diagram of a phase sensitive ultrasonic instrument embodying the invention.

The figure shows an oscillator 10 which outputs a continuous signal of frequency f to a gated amplifier 2 which sends amplified pulses through a transmit-receive (TR) switch 3 to a transducer 1 coupled to a test material. Echoes from reflectors within the test material are detected by the transducer 1 and sent via the TR switch 3 to a receiver amplifier 4, from which amplified echoes are sent to each of two phase detectors 5 and 6. In-phase and quadrature reference signals at the frequency f are derived from a phase splitter 7 and each is sent to a respective one of the two phase detectors 5 and 6. Outputs of the phase detectors 5 and 6 are used, with additional amplification, to deflect a beam of a cathode ray tube (CRT 8) in orthogonal directions.

As the transducer 1 is moved over the test material with no reflectors (e.g. no flaws or boundaries), a random pattern is displayed on the CRT 8. However, when the transducer 1 passes over a reflector, a spiral pattern is displayed. The rotation about the centre of the display represents phase variations and the distance of the spiral from the centre of the screen indicates echo amplitude.

**Claims**

1. Ultrasonic apparatus for testing a material for the presence of a discontinuity therein, the apparatus comprising:

an oscillator (10) for generating an oscillator signal at a selected frequency in the ultrasonic range;

a gated amplifier (2) connected to the oscillator (10) for receiving and amplifying the oscillator signal;

transducer means (1) connected to the oscillator (10) for transmitting an ultrasonic signal at the selected frequency into the material and for receiving an echo signal back from the material;

a transmit-receive switch (3) connected to the gated amplifier (2) and to the transducer (1) for alternately supplying oscillator signals to the transducer (1) and receiving echo signals back from the transducer;

a receiver amplifier (4) connected to the transmit-receive switch (3) for receiving and amplifying the echo signals;

phase detector means (5, 6, 7) comprising a phase splitter (7) connected to the oscillator (10) for producing an in-phase oscillator signal and a quadrature oscillator signal, a first phase detector (5) connected to the phase splitter (7) for receiving the in-phase signal and generating a first display signal, and a second phase detector (6) connected to the phase splitter (7) for receiving the quadrature signal and generating a second display signal, the first and second phase detectors (5, 6) being connected to the receiver amplifier (4) for receiving amplified echo signals therefrom; and

display means comprising a cathode ray tube (8) connected to the first and second phase detectors (5, 6) in such a manner that the first and second display signals are input as orthogonal signals to the cathode ray tube (8), the cathode ray tube (8) generating an image which, when a discontinuity is present, is a rotating spiral vector image the rotation of which about the centre of the display represents phase variations, the distance of the spiral from the centre of the display indicating the amplitude of the echo signal.

2. Apparatus according to claim 1, including frequency sweep means connected to the oscillator (10) for sweeping said selected frequency of the oscillator signal over a selected range of frequencies, whereby the first and second display signals vary with frequency and the configuration of the image generated by the cathode ray tube (8) varies accordingly, the variations of the configuration being useable to determine the depth of a discontinuity in the material which generates the echo signal.

3. The use of ultrasonic apparatus according to claim 1 or claim 2 to test a material for the presence of a discontinuity therein, wherein the transducer (1) is moved across a surface of the material to vary the echo signal from a fixed discontinuity in the material, whereby the point of closest approach of the transducer (1) to the discontinuity is indicated by a zero rate of change of phase of the echo signal.

**Revendications**

1. Appareil à ultra-sons pour essayer un matériau en ce qui concerne la présence d'une discontinuité dans celui-ci, l'appareil comprenant :

un oscillateur (10) pour produire un signal oscillant à une fréquence choisie dans le domaine ultra-sonore ;

un amplificateur à déclenchement (2) relié à l'oscillateur (10) pour recevoir et amplifier le signal oscillant ;

un moyen transducteur (1) connecté à l'oscillateur (10) pour émettre un signal ultrasonore à la fréquence choisie dans le matériau et pour recevoir un signal d'écho en retour du matériau ;

un commutateur émission/réception (3) connecté à l'amplificateur à déclenchement (2) et au transducteur (1) pour, de manière alternée, fournir les signaux oscillants au transducteur (1) et recevoir les signaux échos en retour du transducteur ;

un amplificateur récepteur (4) connecté au commutateur émission/réception (3) pour recevoir et amplifier les signaux d'écho ;

un moyen détecteur de phase (5, 6, 7) comprenant un séparateur de phase (7) connecté à l'oscillateur (10) pour produire un signal oscillant en phase et un signal oscillant en quadrature, un premier détecteur de phase (5) connecté au séparateur de phase (7) pour recevoir le signal en phase et produire un premier signal d'affichage, et un second détecteur de phase (6) connecté au séparateur de phase (7) pour recevoir le signal en quadrature et produire un second signal d'affichage, les premier et second détecteurs de phase (5, 6) étant connectés à l'amplificateur récepteur (4) pour recevoir les signaux d'écho amplifiés de celui-ci ; et

un moyen d'affichage comprenant un tube à rayon cathodique (8) connecté aux premier et second détecteurs de phase (5, 6) de manière à ce que les premier et second signaux d'affichage soient entrés comme des signaux orthogonaux dans le tube à rayon cathodique (8), le tube à rayon cathodique (8) produisant une image qui, lorsqu'une discontinuité est présente, est une image de vecteur spirale tournant dont la rotation autour du centre de l'affichage représente les variations de phase, la distance de la spirale par rapport au centre de l'affichage indiquant l'amplitude du signal d'écho.

2. Appareil selon la revendication 1, comprenant un moyen d'analyse de fréquence connecté à l'oscillateur (10) pour analyser ladite fréquence sélectionnée du signal d'oscillateur dans une plage de fréquence choisie, ce par quoi les premier et second signaux d'affichage varient avec la fréquence et la configuration de l'image produites par le tube à rayon cathodique (8) varie en conséquence, les variations et la configuration étant utilisable pour déterminer la profondeur d'une discontinuité dans le matériau qui produit le signal d'écho.

3. Utilisation de l'appareil à ultra-sons selon la revendication 1 ou la revendication 2, pour essayer un matériau en ce qui concerne la présence d'une discontinuité à l'intérieur, dans laquelle le transducteur 1 est déplacé sur la surface du matériau pour faire varier le signal d'écho à partir d'une discontinuité fixe dans le matériau, ce par quoi le point d'approche le plus rapproché du transducteur (1) par rapport à la discontinuité est indiqué par une vitesse de variation de phase nulle du signal d'écho.

**Patentansprüche**

1. Ultraschallgerät zum Überprüfen eines Materials bezüglich des Vorhandenseins einer Ungleichmäßigkeit bzw. Diskontinuität in dem Material, wobei das Gerät aufweist:

einen Oszillator (10), um ein Oszillatorsignal mit einer ausgewählten Frequenz im Ultraschallbereich zu erzeugen,

einen Verstärker (2) mit Torschaltung, der mit dem Oszillator (10) verbunden ist, um das Oszillatorsignal zu empfangen und zu verstärken,

eine Wandlereinrichtung (1), die an den Oszillator (10) angeschlossen ist, um ein Ultraschallsignal mit der ausgewählten Frequenz in das Material hinüberzuleiten und um ein Echosignal von dem Material zurück aufzunehmen,

einen Sende-Empfangsschalter (3), der mit dem torgesteuerten Verstärker (2) und dem Wandler (1) verbunden ist, um abwechselnd Oszillatorsignale dem Wandler (1) zuzuführen und Echosignale zurück von dem Wandler zu empfangen,

einen Empfangsverstärker (4), der mit dem Sende-Empfangsschalter (3) verbunden ist, um die Echosignale zu empfangen und zu verstärken,

eine Phasendetektoreinrichtung (5, 6, 7), die einen Phasenschieber bzw. Phasenteiler (7) aufweist, welcher mit dem Oszillator (10) verbunden ist, um ein Signal, das in Phase mit dem Oszillatorsignal ist, sowie ein Quadratursignal (um 90° phasenverschobenes Signal) des Oszillators zu erzeugen, einen ersten Phasendetektor (5), der mit dem Phasenschieber (7) verbunden ist, um das in Phase liegende Signal zu empfangen und um ein erstes Anzeigesignal zu erzeugen, sowie einen zweiten Phasendetektor (6), der mit dem Phasenschieber (7) verbunden ist, um das Quadratursignal zu empfangen und um ein zweites Anzeigesignal zu erzeugen, wobei die ersten und zweiten Phasendetektoren (5, 6) mit dem Empfangsverstärker (7) verbunden sind, um von diesem die verstärkten Echosignale zu empfangen, und

Anzeigeeinrichtungen, welche eine Kathodenstrahlröhre (8) aufweisen,die mit den ersten und zweiten Phasendetektoren (5, 6) in der Weise verbunden ist, daß die ersten und zweiten Anzeigesignale als orthogonale Signale in die Kathodenstrahlröhre (8) eingegeben werden, wobei die Kathodenstrahlröhre (8) ein Bild erzeugt, das, wenn eine Ungleichmäßigkeit vorhanden ist, das Bild eines sich drehenden bzw. gedrehten Spiralvektors ist, dessen Verdrehung um den Mittelpunkt der Anzeige Phasenveränderungen entspricht, wobei der Abstand der Spirale von dem Zentrum der Anzeige die Amplitude des Echosignals anzeigt.

2. Vorrichtung nach Anspruch 1, einschließlich einer Frequenzdurchlaufeinrichtung, die mit dem Oszillator (10) verbunden ist, um die ausgewählte Frequenz des Oszillatorsignals über einen ausgewählten Bereich von Frequenzen hinweg zu durchlaufen, wobei die ersten und zweiten Anzeigesignale sich mit der Frequenz verändern und die Gestaltung des von der Kathodenstrahlröhre (8) erzeugten Bildes sich entsprechend verändert, wobei die Veränderungen der Gestaltung verwendbar sind, um die Tiefe einer Ungleichmäßigkeit bzw. Diskontinuität in dem Material zu bestimmen, welches das Echosignal erzeugt.

3. Verwendung eines Ultraschallgerätes nach Anspruch 1 oder 2, um ein Material auf die Anwesenheit einer Ungleichmäßigkeit bzw. Diskontinuität darin zu überprüfen,wobei der Wandler (1) über eine Oberfläche des Materials hinwegbewegt wird, um das Echosignal von einer festen Ungleichmäßigkeit in dem Material zu verändern, wobei der Punkt der dichtesten Annäherung des Wandlers (1) an die Ungleichmäßigkeit durch eine Nullrate der Änderung der Phase des Echosignals angezeigt wird.

OSCILLATOR 10

GATED AMPLIFIER 2

PHASE SPLITTER 0° & 90° 7

TR SWITCH 3

RECEIVER AMPLIFIER 4

TRANSDUCER 1

TEST MATERIAL

PHASE DETECTOR (IN PHASE) 5

PHASE DETECTOR (QUAD) 6

CRT DISPLAY 8

0°

90°